# EUROPÄISCHE PATENTSCHRIFT

(11) **EP 1 195 301 B1**
(45) Veröffentlichungstag und Bekanntmachung des Hinweises auf die Patenterteilung: **02.11.2005**
(21) Anmeldenummer: 01122351.8
(22) Anmeldetag: 19.09.2001
(51) Int. Cl.: B60S 1/08

(54) **Wischvorrichtung sowie Verfahren zum Betreiben der Wischvorrichtung**
Wiper device and method for operating it
Dispositif d'essuie-glace et procédé de commande du dispositif

(30) Priorität: 05.10.2000 DE 10049187
(43) Veröffentlichungstag der Anmeldung: 10.04.2002
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- DE-A- 19 733 426
- DE-C- 3 627 561
- US-A- 4 866 359
- PATENT ABSTRACTS OF JAPAN vol. 008, no. 012 (M-269), 19. Januar 1984 (1984-01-19) & JP 58 174046 A (DAIHATSU KOGYO KK), 13. Oktober 1983 (1983-10-13)
- DATABASE WPI Section PQ, Week 199715 Derwent Publications Ltd., London, GB; Class Q17, AN 1997-160874 XP002263454 & JP 09 030374 A (HONDA MOTOR CO LTD), 4. Februar 1997 (1997-02-04)

## Beschreibung

### Stand der Technik

Die Erfindung betrifft ein Verfahren und eine Vorrichtung zum Wischen von Scheiben von Kraftfahrzeugen nach Gattung der unabhängigen Ansprüche. Es sind schon einige Vorrichtungen bekannt, bei denen zur Verhinderung einer plastischen Verformung des Wischblatts in der Parklage zwei unterschiedliche Parkstellungen vorgesehen sind, wobei jede Parkstellung einer Schlepplage entspricht.

Die DE 197 33 426 A zeigt eine solche Vorrichtung. Innerhalb von vorgegebenen Intervallen wie Tagen, Wochen oder Monaten alterniert das Wischblatt - auch wenn es während dieser Zeit ständig in der Parklage verharrt - zwischen den beiden Parkstellungen und versucht auf diese Weise plastische Verformungen des Wischgummis zu verhindern. Problematisch ist dabei jedoch, daß die Parkstellung sehr häufig, gewechselt wird auch wenn dies noch nicht notwendig wäre. Dadurch wird die Fahrzeugbatterie und damit das Bordnetz unnötig belastet.

### Vorteile der Erfindung

Die erfindungsgemäße Wischvorrichtung mit den Merkmalen des Hauptanspruchs hat den Vorteil, daß bleibende Verformungen der Wischlippe besonders wirksam vermieden werden können. Dazu wird das Intervall, nach dem die Parkstellung gewechselt werden soll, mit Hilfe eines Temperatursignals bestimmt und damit die Temperatur, der die Wischlippe ausgesetzt ist, bei der Bestimmung des Intervalls berücksichtigt. Dies ist deshalb von wesentlichem Vorteil, da der Übergang von elastischer zu plastischer Verformung bei Elastomeren stark von der Temperatur abhängt, der sie ausgesetzt sind.

Durch die Wischarmauflagekraft wirkt auf das Wischblatt ständig eine Kraft, welche die Wischlippe in einer der beiden Schlepplagen auf die Scheibe presst. Diese Auflagekraft führt dazu, daß sich der Wischgummi des Wischblattes bei oft wochenlangem verharren in der Parklage bleibend verformt. Die Verformung bezieht sich dabei vor allem auf den Wischgummiquerschnitt, der - ursprünglich symmetrisch - mit der Zeit eine, einer Schlepplage entsprechenden Geometrie annimmt und diese auch bei Entlastung weitgehend beibehält. Dieser Effekt der bleibenden plastischen Verformung tritt bei hohen Temperaturen, beispielsweise im Sommer, schneller auf als bei niedrigen Temperaturen, wie im Winter. Durch die alternierende Parkstellung werden zwei Positionen abwechselnd angefahren, die den jeweiligen beiden Schlepplagen des Wischgummis entsprechen. Durch die Berücksichtigung der Temperatur bei der Bestimmung der Alternierungsintervalle ergibt sich daher eine besonders gleichmäßige Belastung des Wischgummis, wodurch eine dauerhafte plastische Deformation des Wischgummis vermieden wird.

Durch die in den Unteransprüchen aufgeführten Maßnahmen ergeben sich vorteilhafte Weiterbildungen und Verbesserungen der im Hauptanspruch angegebenen Merkmale.

Korreliert das Temperatursignal mit der Fahrzeugaussentemperatur, kann ein guter Zeitpunkt für einen Wechsel der Parkstellung bestimmt werden und dabei ein im Kraftfahrzeug häufig bereits vorhandenes Signal verwendet werden. Optimalerweise korreliert das Temperatursignal mit der Temperatur des Wischgummis d.h. mit der Temperatur der Wischlippe.

Vorteilhafter Weise ist das Zeitintervall bei einer niedrigen Temperatur größer als bei einer höheren Temperatur, da die plastischen Deformationen des Wischgummis bei hohen Temperaturen schneller eintreten als bei tiefen Temperaturen.

Darüber hinaus ist es von besonderem Vorteil, wenn die Steuerung die Parkstellung auch dann wechselt, wenn die Wischvorrichtung oder das Fahrzeug nicht in Betrieb sind, um besonders dann, wenn das Fahrzeug längere Zeit nicht in Verwendung ist, die Qualität der Wischgummis zu erhalten.

Vorteilhaft ist es insbesondere, das Temperatursignal bei jedem Start des Fahrzeugs abzufragen, da sich nach dem Start aufgrund der Warmeabgabe des Fahrzeugantriebs oder anderer Effekte die Messung der Temperatur verändern, insbesondere verfälschen kann. Natürlich ist es auch möglich, das Temperatursignal vor jedem Wechsel der Parkstellung abzufragen und auf diese Weise das Intervall zwischen folgendem und nächsten Wechsel festzulegen. Dies ist insbesondere dann von Vorteil, wenn das Fahrzeug über eine längere Zeit nicht in Betrieb genommen wird.

Besonders vorteilhaft ist es, wenn die Steuerung derart ausgebildet ist, daß sie das Temperatursignal quasikontinuierlich aufnimmt, aufintegriert und in Abhängigkeit dieses Integrals die Parkstellung wechselt. Die Temperatur des Wischgummis wird so laufend bestimmt und bei erreichen einer vorgebbaren Höchstgrenze des Integrals die Parkstellung gewechselt.

Das erfindungsgemäße Verfahren mit den Merkmalen des Anspruchs 9 hat den Vorteil, daß eine plastische Verformung des Wischgummis dadurch verhindert wird, daß die Steuerung die Länge des Zeitintervalls, in dem die Parkstellung des Wischgummis verändert wird, in Abhängigkeit eines Temperatursignals bestimmt.

Von besonderem Vorteil ist es dabei, wenn die Wischlippe bei einer Richtungsänderung des Wischers von einer Schlepplage in die andere kippt, um durch eine möglichst geringe Bewegung des Wischblatts ein Wechsel der Parkstellung vorzunehmen.

Ist bei diesem Verfahren das Zeitintervall bei einer niedrigen Temperatur entsprechend größer als bei einer hohen Temperatur, wird die Gefahr plastischer Verformungen der Wischlippe weitestgehend reduziert.

Wechselt die Steuerung die Parkstellung auch dann, wenn die Wischvorrichtung oder das Fahrzeug nicht in Betrieb sind, so wird immer zum optimalen Zeitpunkt die Parkstellung gewechselt und die Gefahr plastischer Verformungen der Wischlippe weiter verringert.

Vorteilhaft ist es das Temperatursignal bei jedem Start oder Stop des Fahrzeugs abzufragen. So ist gewährleistet, daß die Temperatureinflüsse auf das Wischblatt mit ausreichender Häufigkeit abgefragt, und damit das Intervall ausreichend genau bestimmt wird.

Wird das Temperatursignal vor jedem Wechsel der Parkstellung abgefragt, so hat dies den Vorteil, daß das Zeitintervall für den übernächsten Wechsel zu einem sehr späten Zeitpunkt und damit mit hoher Genauigkeit festgelegt wird.

Besonders vorteilhaft ist es, das Temperatursignal quasikontinuierlich aufzunehmen und aufzuintegrieren und in Abhängigkeit dieses Integrals die Parkstellung zu wechseln. Die thermische Energie, welche die plastischen Verformungen an der Wischlippe verursacht, wird so gemessen und bei erreichen einer vorgebbaren Höchstgrenze des Integrals die Parkstellung gewechselt.

### Zeichnungen

Ein Ausführungsbeispiel der Erfindung ist in den Zeichnungen dargestellt und in der nachfolgenden Beschreibung näher erläutert. Es zeigen:
Figur 1 eine schematische Darstellung der erfindungsgemäßen Wischvorrichtung,
Figur 2 Querschnitte durch ein Wischblatt mit einer ausgeformten Wischlippe in einer ersten und zweiten Parkstellung und
Figur 3 der Umlegevorgang der Wischlippe im Querschnitt

### Beschreibung des Ausführungsbeispiels

Die erfindungsgemäße Wischvorrichtung weist einen Motor als Antrieb 10 auf, der über eine gestrichelt dargestellte Verbindung 12, beispielsweise ein Getriebe, einen Wischer 14 antreibt. Der Wischer 14 weist ein Wischblatt 16 auf, mit der eine Scheibe 18 im Bereich eines Wischfeldes 20 zwischen zwei Umkehrlagen U1, U2 gewischt wird. Dazu wird der Motor 10 durch eine Steuerung 25 in unterschiedlichen Wischbetrieben angesteuert, die wiederum durch einen Schalter 24 manuell vorgebbar sind. Ebenso ist natürlich die Ansteuerung des Wischbetriebs aufgrund von Signalen eines Regensensors möglich. Darüber hinaus erhält die Steuerung 25 ein Temperatursignal S, das in der Elektronik von vielen Fahrzeugen bereits zur Verfügung steht. Natürlich kann aber auch ein einfaches Thermometer, welches an einem geeigneten Ort angeordnet ist, das Temperatursignal S an die Steuerung 25 vermitteln.

Der Wischer 14 wird in eine Parklage P verfahren, wenn der Wischbetrieb des Wischers 14 ausgeschaltet oder bei einem Intervallbetrieb unterbrochen wird. Bei letzterem wird der Wischer 14 zwischen den einzelnen Wischzyklen des Intervallbetriebs in der Parklage P geparkt. Diese Parklage P befindet sich üblicherweise am unteren Rand der Scheibe 18 nahe der Scheibeneinfassung 30.

Als Motor 10 wird ein Umsteuermotor verwendet, der beispielsweise über eine nichtdargestellte drehbare Motorkurbel und ein Pendelgetriebe als Verbindung 12 den Wischer 14 pendelnd antreibt. Durch variieren des Drehwinkels der Motorkurbel werden unterschiedliche Parkstellungen in der Parklage P realisiert. Eine weitere Alternative der Gestaltung der Verbindung 12 besteht darin, den Wischer 14 direkt auf der Abtriebswelle des Motors 10 anzubringen, so daß durch Variieren des Drehwinkels der Motorabtriebswelle die Parkstellungen in der Parklage P angefahren werden.

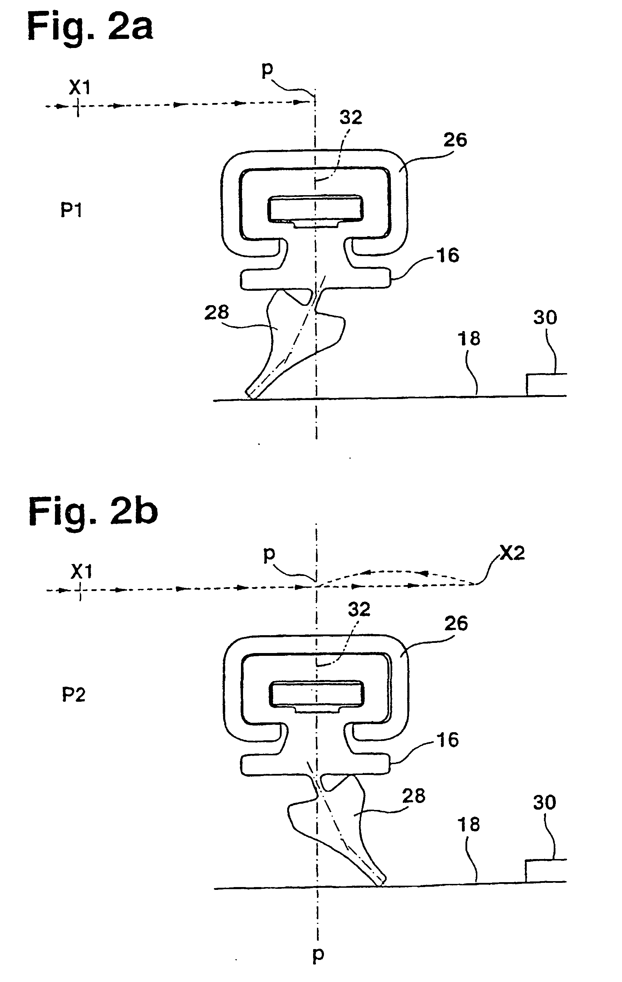

Figur 2a zeigt eine erste, Figur 2b zeigt eine zweite Parkstellung, P1, P2 des Wischblatts 16 in der Parklage P. Das Wischblatt 16 ist in einer Halterung 26 am Wischer 14 befestigt. Am Wischblatt 16 ausgeformt ist eine Wischlippe 28. Die Wischlippe ist in der ersten Parkstellung von der Scheibeneinfassung 30 weggerichtet, in der zweiten Parkstellung P2 zu dieser hingerichtet.

Eine Symmetrieachse 32 des Wischblattes 16 im unbelasteten Zustand ist ebenfalls dargestellt. Im folgenden wird diese Position des Wischblattes 16 durch die Symmetrieachse 32 definiert. Beispielsweise befindet sich der Wischer 14 in der Parklage P, wenn die Symmetrieachse 32 und die Parklage P deckungsgleich sind.

Mit gestrichelten Pfeilen ist die Bewegungsrichtung des Wischblattes 16 bis zur Ablage in der Parklage P in der ersten bzw. zweiten Parkstellung P1, P2 veranschaulicht. Eingezeichnet sind ebenfalls Positionen X1, bzw. X1 und X2, die spezifische Positionen des Wischblattes 16 beim Anfahren der ersten bzw. der zweiten Parkstellung P1, P2 kennzeichnen.

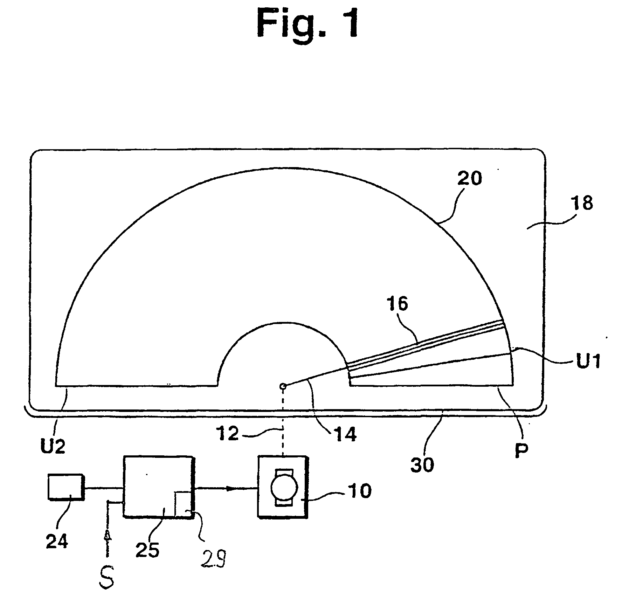

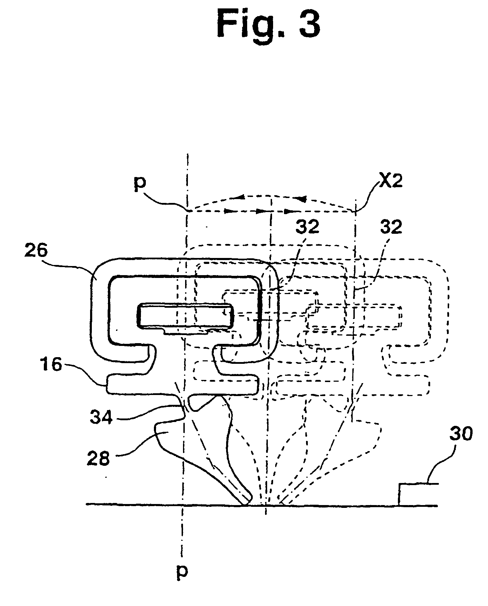

In Figur 3 wird der Umlegevorgang des Wischblattes 16 zum Anfahren der zweiten Parkstellung P2 dargestellt. Die Wischlippe 28 ist über einen Umlegesteg 34 mit dem Wischblatt 16 verbunden. Die Funktionsweise der erfindungsgemäßen Vorrichtung nach Figur 1 wird im folgenden gemäß Figur 2 und 3 beschrieben. Die erfindungsgemäße Wischvorrichtung für Scheiben 18 von Fahrzeugen, insbesondere Kraftfahrzeugen, wischt die Scheibe 18 beispielsweise in einem Dauerwischbetrieb. Nach dem Betätigen des Bedienschalters 24 zum Abschalten des Wischbetriebs fährt die Steuerung 22 des Wischblatts 16 in die Parklage P.

Gemäß Figur 2a wird nun das Anfahren der ersten Parkstellung P1 beschrieben. Die Position X1 kennzeichnet eine beliebige Position des Wischblattes 16 innerhalb des Wischfeldes 20 vor der Parklage P. Während des Wischens ist die Wischlippe 28 entgegen der Wischrichtung abgeknickt. Bewegt sich beispielsweise das Wischblatt 16 nach rechts, dann ist die Wischlippe 28 nach links abgeknickt. Die Lage der Wischlippe 28 wird im folgenden als erste Schlepplage bezeichnet, da sie also jeweils vom Wischblatt 16 mitgeschleppt wird. Erreicht das Wischblatt 16 die Parklage P, dann wird der Motor 10 ausgeschaltet und die Wischlippe 28 befindet sich in der ersten Parkstellung P1 die der ersten Schlepplage der Wischlippe 28 entspricht.

Gemäß Figur 2b wird das Anfahren der zweiten Parkstellung erläutert. Ausgehend von der Position X1 wird das Wischblatt 16 über die Parklage P bis zur Position X2 verfahren. Hier wird der Motor 10 durch die Steuerung 22 reversiert, so daß die Wischrichtung wechselt und das Wischblatt sich wieder auf die Parklage P zubewegt. Dabei wird die Wischlippe 28 gemäß Figur 3 von der ersten Schlepplage über den Umlegesteg 34 in die zweite Schlepplage umgelegt. Bei Erreichen der Parklage P wird der Motor 10 durch die Steuerung 22 ausgeschaltet und die Wischlippe 28 befindet sich in der zweiten Parkstellung P2.

In Figur 3 ist ersichtlich, daß zum Anfahren der zweiten Parkstellung P2 die Parklage P soweit überfahren werden muß, daß die Wischlippe 28 problemlos über den Umlegesteg 34 in die zweite Schlepplage kippen kann. Der Abstand zwischen Position X2 und der Parklage P ergibt sich also folglich aus der Geometrie der Wischlippe 28 und ihrem Kippwinkel bezüglich der Symmetrieachse 32 in der Schlepplage und wird vorgegeben.

Die alternierende Ablage der Wischlippe 28 in die beiden Parkstellungen P1, P2 wird durch die Steuerung 25 realisiert. Diese weist einen nicht flüchtigen Speicher und einen Zeitgeber 29 auf. Im nicht flüchtigen Speicher sind Tabellen oder mathematische Funktionen abgelegt, die für jeden Temperaturbereich ein entsprechendes Zeitintervall zum Wechsel der Parkstellung ermitteln. Natürlich können in diesem nicht flüchtigen Speicher auch weitere Voreinstellungen abgelegt sein, wie beispielsweise die zuletzt eingenommene Parkstellung P1 oder P2 und/oder zu welchem Zeitpunkt das Temperatursignal von der Steuerung 25 ausgewertet werden soll.

Insbesondere kann hier auch ein aufintegriertes Temperatursignal zum dynamischen Parkstellungswechsel gespeichert sein. Dieses aufintegrierte Signal läuft dann bei jeder Temperaturmessung, die beispielsweise jede viertel Stunde erfolgt, hoch bis ein vorgegebener Wert erreicht ist. Dann wird von der Parkstellung P1 in P2 - oder umgekehrt - gewechselt und das aufintegrierte Signal zurückgesetzt. In diesem Falle wird dann auch kein Zeitgeber 29 benötigt, da das Zeitintervall quasi dynamisch bestimmt ist.

Beim erfindungsgemäßen Verfahren kann beispielsweise bei jedem Fahrzeugstart, also bei jedem Ein- und/oder Ausschalten der Zündung von der Steuerung 25 ein Temperatursignal S aufgenommen werden. Daraufhin legt die Steuerung 25 aufgrund der Größe des Temperatursignals S das Zeitintervall fest, nach dessen Ablauf die Steuerung 25 die Wischlippe 28 in die andere Parkstellung P1, P2 wechselt. Bis zum Ablauf dieses Zeitintervalls wird bei jedem Start des Fahrzeugs das Temperatursignal neu abgefragt und nach jeder Messung die verbleibende Zeit nach einem im nichtflüchigen Speicher festgelegten Algorithmus korrigiert.

In einer einfacheren Variante ist es auch möglich, das Temperatursignal S lediglich vor jedem Wechsel der Parkstellung P1, P2 abzufragen. Damit entfällt jegliche Korrektur des Intervalls aufgrund wechselnder Temperatureinflüsse.

In einer Abwandlung kann auch nach Ermittlung des Zeitintervalls überprüft werden, ob die vergangene Zeit seit dem letzten Parkstellungswechsel größer ist als die ermittelte Zeit und daraufhin nach der nächsten Wischanlagenbetätigung, oder nach dem nächsten Ein- oder Abschalten der Zündung die Parkstellung P1, P2 gewechselt werden.

Natürlich ist es auch möglich das Temperatursignal S beispielsweise bei jedem 5., 10. oder n-ten Start abzufragen bzw. vor jedem n-ten Parkstellungswechsel abzufragen.

In einer weiteren Variation des erfindungsgemäßen Verfahrens wird bei Messung einer Temperatur unterhalb von 0°C der automatische Parkstellungswechsel zumindest bis zu einer manuellen Betätigung der Wischvorrichtung unterdrückt, um Beschädigungen der Wischlippe 28 zu vermeiden.

## Patentansprüche

1. Wischvorrichtung, insbesondere zum Wischen von Scheiben von Kraftfahrzeugen, mit einem, von einer Steuerung (25) steuerbaren Antrieb (10) und mindestens einem, durch den Antrieb (10) pendelnd bewegbaren Wischer (14) mit einem Wischblatt (16), welches in eine Parklage (P) verfahrbar ist und eine Wischlippe (28) aufweist, welche in der Parklage (P), in unterschiedlichen Parkstellungen (P1, P2) ablegbar ist und die Steuerung (25) die Parkstellung (P1, P2) nach bestimmten Zeitintervallen wechselt, **dadurch gekennzeichnet, daß** die Steuerung (25) derart ausgebildet ist, daß sie ein Temperatursignal (S) zur Bestimmung der Länge des Zeitintervalles heranzieht.

2. Wischvorrichtung nach Anspruch 1, **dadurch gekennzeichnet, daß** die Wischlippe (28) von der Steuerung (25) in der Parklage (P) in einer ersten oder zweiten Parkstellung (P1, P2) ablegbar ist, die einer ersten oder zweiten Schlepplage der Wischlippe (28) entsprechen, wobei die Wischlippe (28) bei einer Richtungsänderung des Wischers (14) von einer Schlepplage in die andere kippt.

3. Wischvorrichtung nach Anspruch 1 oder 2, **dadurch gekennzeichnet, daß** das Temperatursignal (S) mit der Fahrzeugaußentemperatur oder mit der Temperatur der Wischlippe (28) korreliert.

4. Wischvorrichtung nach einem der Ansprüche 1 bis 3, **dadurch gekennzeichnet, daß** die Zeitintervalle bei einem, einer niedrigen Temperatur entsprechenden Temperatursignal (S) größer als bei einem, einer hohen Temperatur entsprechendnen Temperatursignal (S) sind.

5. Wischvorrichtung nach einem der vorhergehenden Ansprüche, **dadurch gekennzeichnet, daß** die Steuerung (25) die Parkstellung (P1, P2) auch dann wechselt, wenn die Wischvorrichtung oder das Fahrzeug nicht in Betrieb sind.

6. Wischvorrichtung nach einem der Ansprüche 1 bis 5, **dadurch gekennzeichnet, daß** die Steuerung (25) derart ausgebildet ist, daß sie das Temperatursignal (S) bei jedem Start oder Stop des Fahrzeugs abfrägt.

7. Wischvorrichtung nach einem der Ansprüche 1 bis 6, **dadurch gekennzeichnet, daß** die Steuerung (25) derart ausgebildet ist, daß sie das Temperatursignal (S) vor jedem Wechsel der Parkstellung (P1, P2) abfrägt.

8. Wischvorrichtung nach einem der Ansprüche 1 bis 7, **dadurch gekennzeichnet, daß** die Steuerung (25) ein Integral des Temperatursignals (S) bildet und die Parkstellung (P1, P2) in Abhängigkeit des Integrals, insbesondere bei Überschreiten einer Schwelle, wechselt.

9. Verfahren zum Wischen von Scheiben, insbesondere von Kraftfahrzeugen, mit einem Antrieb (10), der von einer Steuerung (25) gesteuert wird, und einen Wischer (14) mit einem Wischblatt (16) pendelnd antreibt, welches in eine Parklage (P) verfahrbar ist und eine Wischlippe (28) aufweist, welche in der Parklage (P), in unterschiedlichen Parkstellungen (P1, P2) ablegbar ist und die Steuerung (25) die Parkstellung (P1, P2) nach bestimmten Zeitintervallen wechselt, insbesondere für eine Wischvorrichtung nach einem der vorhergehenden Ansprüche, **dadurch gekennzeichnet, daß** die Steuerung (25) die Länge des Zeitintervalles in Abhängigkeit eines Temperatursignals (S) bestimmt.

10. Verfahren nach Anspruch 9, **dadurch gekennzeichnet, daß** die Wischlippe (28) von der Steuerung (25) in der Parklage (P) in einer ersten oder zweiten Parkstellung (P1, P2) abgelegt wird, die einer ersten oder zweiten Schlepplage der Wischlippe (28) entsprechen und die Wischlippe (28) bei einer Richtungsänderung der Wischers (14) von einer Schlepplage in die andere kippt.

11. Verfahren nach Anspruch 9 oder 10, **dadurch gekennzeichnet, daß** das Temperatursignal (S) unter Berücksichtigung der Fahrzeugaußentemperatur ermittelt wird.

12. Verfahren nach einem der Ansprüche 9 bis 11, **dadurch gekennzeichnet, daß** die Zeitintervalle bei einem, einer niedrigen Temperatur entsprechenden Temperatursignal (S) größer als bei einem, einer hohen Temperatur entsprechendnen Temperatursignal (S) sind.

13. Verfahren nach einem der Ansprüche 9 bis 12, **dadurch gekennzeichnet, daß** die Steuerung (25) die Parkstellung (P1, P2) auch dann wechselt, wenn die Wischvorrichtung oder das Fahrzeug nicht in Betrieb sind.

14. Verfahren nach einem der Ansprüche 9 bis 13, **dadurch gekennzeichnet, daß** das Temperatursignal (S) von der Steuerung (25) bei jedem Start des Fahrzeugs abgefragt wird.

15. Verfahren nach einem der Ansprüche 9 bis 14, **dadurch gekennzeichnet, daß** das Temperatursignal (S) von der Steuerung (25) vor jedem Wechsel der Parkstellung (P1, P2) abgfragt wird.

16. Verfahren nach einem der Ansprüche 9 bis 15, **dadurch gekennzeichnet, daß** die Parkstellung (P1, P2) gewechselt wird, wenn ein vorbestimmtes Integral des Temperatursignals (S) überschritten wird.

## Claims

1. Wiper device, in particular for wiping windows of motor vehicles, having a drive (10) which can be controlled by a controller (25), and at least one wiper (14) which can be moved in a swinging manner by the drive (10) and has a wiper blade (16) which can be moved into a parked position (P) and has a wiper lip (28) which, in the parked position (P), can be placed into different parking positions (P1, P2), and the controller (25) changes the parking position (P1, P2) after certain time intervals, **characterized in that** the controller (25) is designed in such a manner that it uses a temperature signal (S) to determine the length of the time interval.

2. Wiper device according to Claim 1, **characterized in that** the wiper lip (28) can be placed in the parked position (P) by the controller (25) in a first or second parking position (P1, P2) which correspond to a first or second dragging position of the wiper lip (28), the wiper lip (28) tipping from one dragging position into the other upon a change in direction of the wiper (14).

3. Wiper device according to Claim 1 or 2, **characterized in that** the temperature signal (S) correlates with the outside temperature of the vehicle or with the temperature of the wiper lip (28).

4. Wiper device according to one of Claims 1 to 3, **characterized in that** the time intervals are greater at a temperature signal (S) which corresponds to a low temperature than at a temperature signal (S) which corresponds to a high temperature.

5. Wiper device according to one of the preceding claims, **characterized in that** the controller (25) even changes the parking position (P1, P2) when the wiper device or the vehicle is not in operation.

6. Wiper device according to one of Claims 1 to 5, **characterized in that** the controller (25) is designed in such a manner that it interrogates the temperature signal (S) during each starting or stopping of the vehicle.

7. Wiper device according to one of Claims 1 to 6, **characterized in that** the controller (25) is designed in such a manner that it interrogates the temperature signal (S) before each changing of the parking position (P1, P2).

8. Wiper device according to one of Claims 1 to 7, **characterized in that** the controller (25) forms an integral of the temperature signal (S) and changes the parking position (P1, P2) as a function of the integral, in particular when a threshold is exceeded.

9. Method for wiping windows, in particular of motor vehicles, having a drive (10) which is controlled by a controller (25) and drives a wiper (14) having a wiper blade (16) in a swinging manner, which wiper blade can be moved into a parked position (P) and has a wiper lip (28) which, in the parked position (P), can be placed into different parking positions (P1, P2), and the controller (25) changes the parking position (P1, P2) after predetermined time intervals, in particular for a wiper device according to one of the preceding claims, **characterized in that** the controller (25) determines the length of the time interval as a function of a temperature signal (S).

10. Method according to Claim 9, **characterized in that** the wiper lip (28) is placed in the parked position (P) by the controller (25) in a first or second parking position (P1, P2) which correspond to a first or second dragging position of the wiper lip (28), and the wiper lip (28) tips from one dragging position into the other upon a change in direction of the wiper (14).

11. Method according to Claim 9 or 10, **characterized in that** the temperature signal (S) is determined taking the outside temperature of the vehicle into consideration.

12. Method according to one of Claims 9 to 11, **characterized in that** the time intervals are greater at a temperature signal (S) which corresponds to a low temperature than at a temperature signal (S) which corresponds to a high temperature.

13. Method according to one of Claims 9 to 12, **characterized in that** the controller (25) even changes the parking position (P1, P2) when the wiper device or the vehicle is not in operation.

14. Method according to one of Claims 9 to 13, **characterized in that** the temperature signal (S) is interrogated by the controller (25) during each starting of the vehicle.

15. Method according to one of Claims 9 to 14, **characterized in that** the temperature signal (S) is interrogated by the controller (25) before each changing of the parking position (P1, P2).

16. Method according to one of Claims 9 to 15, **characterized in that** the parking position (P1, P2) is changed when a predetermined integral of the temperature signal (S) is exceeded.

## Revendications

1. Dispositif d'essuyage, notamment d'essuie-glace de véhicules automobiles, comportant un entraînement (10) commandé par une commande (25) et au moins un balai d'essuie-glace (14) entraîné suivant un mouvement pendulaire par le moyen d'entraînement (10), cet essuie-glace (14) ayant un balai d'essuie-glace (16) qui peut être mis en position de rangement (P), le balai ayant une lèvre d'essuyage (28) qui peut venir dans différentes positions de rangement (P1, P2) pour la position de rangement (P) et la commande (25) modifie la position de rangement (P1, P2) après certains intervalles de temps définis,
**caractérisé en ce que**
la commande (25) tient compte d'un signal de température (S) pour déterminer la durée de l'intervalle de temps.

2. Dispositif d'essuyage selon la revendication 1,
**caractérisé en ce que**
la lèvre d'essuyage (28) est déposée par la commande (25) en position de rangement (P) dans une première et dans une seconde position de rangement (P1, P2), correspondant à une première et une seconde position tirées de la lèvre d'essuyage (28),
la lèvre d'essuyage (28) bascule d'une position tirée à l'autre pour un changement de direction de l'essuie-glace (14).

3. Dispositif d'essuyage selon la revendication 1 ou 2,
**caractérisé en ce que**
le signal de température (S) est mis en corrélation avec la température extérieure du véhicule ou celle de la lèvre d'essuyage (28).

4. Dispositif d'essuyage selon l'une des revendications 1 à 3,
**caractérisé en ce que**
les intervalles de temps correspondant à un signal de température (S) d'une température faible sont plus longs que ceux correspondant à un signal de température (S) pour une température élevée.

5. Dispositif d'essuyage selon l'une quelconque des revendications précédentes,
**caractérisé en ce que**
la commande (25) change la position de rangement (P1, P2) si le dispositif d'essuyage ou le véhicule sont à l'arrêt.

6. Dispositif d'essuyage selon l'une quelconque des revendications 1 à 5,
**caractérisé en ce que**
la commande (25) demande le signal de température (S) à chaque démarrage ou chaque arrêt du véhicule.

7. Dispositif d'essuyage selon l'une quelconque des revendications 1 à 6,
**caractérisé en ce que**
la commande (25) demande le signal de température (S) avant chaque alternance de position de rangement (P1, P2).

8. Dispositif d'essuyage selon l'une quelconque des revendications 1 à 7,
**caractérisé en ce que**
la commande (25) forme l'intégrale du signal de température (S) et la position de rangement (P1, P2) change en fonction de l'intégrale, notamment en cas de dépassement d'un seuil.

9. Procédé d'essuyage de vitre, notamment de véhicules automobiles, comportant un moyen d'entraînement (10) commandé par une commande (25) et un essuie-glace (14) muni d'un balai d'essuyage (16) entraîné suivant un mouvement pendulaire et qui peut venir en position de rangement (P) et comporte une lèvre d'essuyage (28) qui peut se placer dans des positions de rangement différentes (P1, P2) lorsque le balai est en position de rangement (P), et la commande (25) modifie la position de rangement (P1, P2) après certains intervalles de temps, notamment pour un dispositif d'essuie-glace selon l'une des revendications précédentes,
**caractérisé en ce que**
la commande (25) détermine la durée de l'intervalle de temps en fonction d'un signal de température (S).

10. Procédé selon la revendication 9,
**caractérisé en ce que**
la lèvre d'essuyage (28) est placée par la commande (25) dans la position de rangement (P) correspondant à la première ou à la seconde position de rangement (P1, P2) qui fait basculer la première ou la seconde position tirée de la lèvre d'essuyage (28) de façon correspondante et en cas de changement de direction du balai d'essuie-glace (14) la lèvre d'essuyage (28) bascule d'une position tirée à l'autre.

11. Procédé selon la revendication 9 ou la revendication 10,
**caractérisé en ce qu'**
on détermine le signal de température (S) en tenant compte de la température extérieure du véhicule.

12. Procédé selon l'une des revendications 9 à 11,
**caractérisé en ce que**
les intervalles de temps correspondant à un signal de température (S) de température faible sont plus grands que ceux correspondant à un signal de température (S) à niveau de température plus élevé.

13. Procédé selon l'une des revendications 9 à 12,
**caractérisé en ce que**
la commande (25) modifie la position de rangement (P1, P2) même lorsque le dispositif d'essuyage ou le véhicule ne fonctionne pas.

14. Procédé selon l'une des revendications 9 à 13,
**caractérisé en ce que**
le signal de température (S) est demandé par la commande (25) à chaque démarrage du véhicule.

15. Procédé selon l'une des revendications 9 à 14,
**caractérisé en ce que**
le signal de température (S) est demandé par la commande (25) avant chaque changement de position de rangement (P1, P2).

16. Procédé selon l'une des revendications 9 à 15,
**caractérisé en ce qu'**
on change la position de rangement (P1, P2) si une intégrale prédéfinie du signal de température (S) est dépassée.
